# FASCICULE DE BREVET EUROPEEN

(11) **EP 0 504 212 B1**
(45) Date de publication et mention de la délivrance du brevet: **02.03.1994**
(21) Numéro de dépôt: 91900273.3
(22) Date de dépôt: 04.12.1990
(51) Int. Cl.: A23G 9/28, A23G 3/20, A47J 43/04

(54) **DISPOSITIF A SELECTION DE FRUITS PERMETTANT LEUR BROYAGE ET LEUR MALAXAGE POUR DISTRIBUTION D'ENTREMETS**
ZUM PASSIEREN UND MISCHEN GEEIGNETER ZWISCHENMAHLZEITSPENDER MIT FRUCHTAUSWAHLSYSTEM
DEVICE FOR THE SELECTION, CRUSHING AND MIXING OF FRUITS FOR PREPARING DESSERTS

(30) Priorité: 05.12.1989 FR 8916168
(43) Date de publication de la demande: 23.09.1992
(73) Titulaire: GRANDI, René, F-38300 Bourgoin-Jallieu (FR)
(72) Inventeur: GRANDI, René, F-38300 Bourgoin-Jallieu (FR)
(74) Mandataire: Roman, Michel
(86) Numéro de dépôt international: FR9000879
(87) Numéro de publication internationale: WO9107879

(56) Documents cités:
- FR-A- 828 650
- US-A- 2 167 536
- US-A- 2 433 141
- US-A- 3 285 198
- US-A- 3 291 076
- US-A- 4 010 284
- US-A- 4 447 458
- US-A- 4 645 093
- US-A- 4 708 489

## Description

Il est connu des dispositifs distributeurs de fruits frais ou congelés qui après une opération de broyage permettent d'effectuer des entremets ou des crèmes glacées ou non, en mélangeant ces fruits avec une crème neutre ne dénaturalisant pas le parfum du fruit ajouté.

Mais hormis la distribution des fruits présentés, le broyage de ceux-ci et le mélange avec la crème doivent être effectués manuellement par un opérateur qui doit pulvériser avec un broyeur individuel le fruit désiré puis le mélanger à la crème neutre pour enfin le distribuer au consommateur.

Toutes ces opérations représentent un travail long et fastidieux. De plus, à chaque opération de changement de parfum de fruit, il faut rincer le broyeur ainsi que tous les instruments ayant nécessité ces opérations. Ces manoeuvres retardant d'autant plus la distribution.

Un inventeur, M. John R. JONES, décrit dans le brevet US-A-4 645 093 un distributeur automatique de portions de glaces ayant l'aspect d'un classique distributeur de boissons. Cet appareil comporte un monnayeur, un support rotatif recevant un gobelet destiné au client et rempli au dernier moment de crème glacée par la machine, un système de boutons de sélection permettant d'ajouter à la demande divers sirops ou ingrédients tels que noix pilée, grâce à des buses adéquates disposées au-dessus dudit support rotatif.

A l'aide de cet appareil la crème glacée sera simplement recouverte d'un sirop et/ou d'un autre ingrédient.

Le brevet US-A-4 708 489, déposé par M. Gary CARLSON, présente une machine destinée à incorporer dans la crème glacée des fruits, des noix ou divers produits de confiseries, caractérisée par une vis hélicoïdale conique tournant dans un réceptacle également conique. La vis est équipée à son extrémité d'un couteau rotatif tournant à une vitesse différente et destiné à réduire si nécessaire la taille des éléments à mélanger.

Après chaque opération de mélange, la vis doit être relevée grâce à un moteur pour nettoyer le réceptacle avant de la recharger en crème glacée et ingrédients à incorporer.

Le dispositif qui va être décrit, évite ces inconvénients de manutention tout en conservant une hygiène parfaite, par la réfrigération constante des fruits stockés et des fruits broyés et malaxés avec la crème. Le nettoyage de l'ensemble du dispositif n'est pas nécessaire quotidiennement.

Il est constitué par un cône de distribution, des fruits, ceux-ci pouvant être divers frais ou congelés (fraises, bananes, myrtilles, cerises, raisins etc...) mais tous doivent être calibrés afin de pouvoir être plus aisément broyés.

Ce cône comporte plusieurs compartiments, 6 ou 8 et est monté sur une couronne de distribution entraînée par un moteur, le tout formant un carrousel de sélection.

Sur la périphérie du cône, des vitrines permettent à la clientèle de contrôler les fruits de son choix.

Chacun des compartiments comporte individuellement une vis sans fin et un bol mélangeur, pour permettre la distribution en continu de fruits à goût différent sans pour cela, changer et rincer à chaque fois les instruments.

La vis sans fin permet à la fois, d'introduire le fruit choisi dans le bol, puis de le pulvériser ou le broyer, au moyen d'une hélice en "nylon" alimentaire ou en acier inoxydable située à son extrémité, celle-ci ayant également la fonction de mélanger et malaxer les fruits broyés avec la crème neutre introduite à son tour dans le bol mélangeur.

Pour effectuer l'opération demandée selon le fruit choisi, le cône de distribution tourne autour d'un corps central cylindrique faisant usage de récipient, au moyen de la couronne de distribution et de son moteur.

Ce récipient est divisé en deux parties au niveau de la couronne de distribution, et chacune des parties contient l'une une crème neutre, glacée ou pas, et l'autre une crème différente, telle que la crème "chantilly" venant décorer la présentation de l'entremets prêt à être consommé.

Chacun des récipients comporte un piston actionné par une vis sans fin à bille motorisée, venant pousser la crème pour la faire introduire par un goulot dans le bol mélangeur des fruits broyés pour être malaxés avec ceux-ci, cela pour ce qui concerne la crème neutre.

Chaque piston comporte sur sa périphérie un joint racleur permettant son étanchéité lors de la poussée.

Chacun des goulots des récipients est équipé d'un clapet anti-retour permettant de fermer l'orifice, lorsque la crème n'est plus poussée.

Un couvercle permet le remplissage du récipient supérieur, alors que le remplissage du récipient inférieur, s'effectue par une ouverture située sur le haut de la paroi de ce dernier.

Ces récipients contenant les crèmes, sont réfrigérés par des évaporateurs à serpentins dont le froid est produit par un compresseur situé dans la partie inférieure du dispositif. Ces serpentins sont situés tout autour des parois extérieures des récipients.

Cette réfrigération permet également de réfrigérer le cône de distribution ainsi que le bol mélangeur, maintenant au frais les fruits stockés et les fruits broyés et malaxés avec la crème.

Par son mouvement giratoire, le cône tournant sur sa couronne autour du corps central composé par le récipient et les évaporateurs à serpentins, (cet ensemble étant fixe) vient positionner le compartiment du fruit sélectionné ainsi que le bol mélangeur sur une coupe ou barquette réceptionnant le produit fini.

Le bol mélangeur comporte sur sa périphérie un engrenage et une fois le fruit étant sélectionné et le cône positionné, un moteur réducteur à pignon vient entraîner et faire tourner le bol mélangeur, pour broyer les fruits et les malaxer ensuite à la crème.

Une fois le mélange des fruits et de la crème effectué, il est introduit dans la coupe au moyen d'une poignée que l'utilisateur aura actionnée libérant ainsi le bol mélangeur, mais cette fonction effectuée automatiquement ainsi que celle de la décoration de la coupe en crème "Chantilly".

Toutes ces opérations peuvent être faites soit manuellement soit motorisées. Le choix ainsi que les quantités pourront également être déterminés électroniquement par des commandes situées sur un pupitre. Le dispositif pouvant alors fonctionner sans l'aide d'un opérateur, et avec un monnayeur comme un autre distributeur automatique.

Ce dispositif pourra si on le désire, ne servir que des fruits pressés, sans adjonction de crème neutre, ou bien sans crème "chantilly".

Afin de permettre à la vis sans fin d'entraîner et de broyer correctement les fruits ceux-ci devront être tous calibrés.

Par ce dispositif on a également la possibilité d'effectuer directement la préparation de la crème glacée en introduisant par le sommet du dispositif et par la vis sans fin à bille creuse, un fouet actionné par un moteur, ce fouet étant retiré, lorsque la préparation est terminée, libérant ainsi le piston pour pousser la crème.

L'ensemble fouet et moteur est fixé au récipient supérieur, par des vis papillons ou par un système plus rapide de cliquetage.

Par tous ces moyens le dispositif décrit, permet la préparation et la distribution de différents types de desserts, entremets ou même de boissons avec des fruits pressés.

Pour cette dernière préparation de fruits pressés une évacuation des déchets peut être envisagée soit par une ouverture dans le bol, soit par un système automatique de marche arrière de l'hélice du bol, entraînant avec elle les déchets, et les évacuant par l'ouverture prévue dans le bol.

L'habillage de ce carrousel de distribution est pourvu d'une forte isolation pour préserver les produits et les maintenir dans une ambiance réfrigérée.

Sur les dessins ci-annexés, donnés à titre d'exemple non limitatif d'une des formes de réalisation de l'invention.
- La figure 1 représente le dispositif ou carrousel de sélection dans son ensemble, et en coupe transversale.
- La figure 2 représente le dispositif vu de dessous.
- La figure 3 représente la vis sans fin et son hélice de broyage dans le bol mélangeur à engrenage.

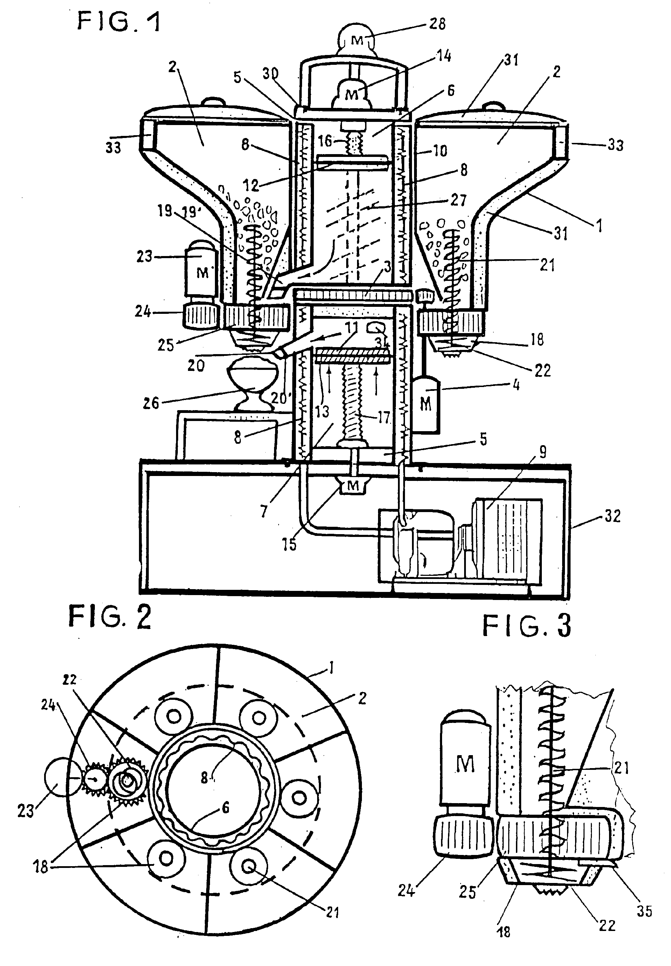

Sur la figure 1, le carrousel de sélection, comprend le cône de distribution 1, à plusieurs compartiments 2, entraîné par la couronne 3 et son moteur 4. Le corps central 5 fixe, est composé par deux récipients 6 et 7 contenant la crème neutre et la crème "Chantilly".

Le tout étant réfrigéré par les évaporateurs à serpentins 8, et leur groupe de froid 9 situé dans la partie inférieure 32 du dispositif sur le quel il est fixé.

Chaque récipient comporte un piston 10 et 11, ayant chacun un joint racleur 12 et 13, chaque moteur 14 et 15 actionne les pistons au moyen de vis sans fin à bille 16 et 17, pour faire pénétrer les crèmes dans le bol mélangeur 18, par leur goulot respectif d'évacuation 19 et 20, après que la vis sans fin 21, située dans chaque compartiment de fruit 2, ait broyé le fruit choisi au moyen de son hélice 22 située à son extrémité.

Des clapets anti-retour 19' et 20', permettent de fermer les goulots 19 et 20, lorsqu'il n'y a plus de poussée de la crème.

La crème contenue dans le récipient inférieur 7, est introduite dans ce dernier par un orifice 34.

Cette opération est effectuée automatiquement, dès que le compartiment de fruit 2 est positionné face au moteur 23, qui entraîne par son engrenage 24, celui 25 du bol mélangeur 18, et en le faisant tourner permet ainsi le broyage des fruits puis leur malaxage avec la crème neutre.

Une coupe ou barquette 26 réceptionne l'entremets prêt à être consommé.

Pour la préparation directe de la crème dans le récipient supérieur 6, un fouet 27 est actionné par un moteur 28 qui est cliqueté sur le dispositif au moyen de vis papillons 30 ou un autre cliquetage pour le retrait rapide de cet ensemble, une fois la crème réalisée.

Une forte isolation 31 évite la perdition des frigories.

Des vitrines 33 situées sur la périphérie de chaque compartiment de fruits 2, permettent la visualisation du contenu par l'utilisateur.

Sur la figure 2, on peut voir les compartiments de fruits 2 du cône de distribution 1, le récipient 6 et l'évaporateur à serpentins 8, ainsi que le moteur 23 son engrenage 24 enclenché dans l'engrenage 25 du bol mélangeur 18 contenant l'hélice 22 de la vis sans fin 21.

La figure 3, montre la vis sans fin 21 à son extrémité l'hélice de broyage 22, dans le bol mélangeur 18 à engrenage 25, venant s'enclencher dans l'engrenage 24 du moteur 25, pour broyer et malaxer fruits et crème. L'orifice 35 permet l'évacuation des déchets lors de la rotation inversée de l'hélice 22 pour la fabrication de fruits pressés.

## Revendications

1. Dispositif réfrigéré de fabrication et de distribution d'entremets par broyage de fruits sélectionnés puis malaxés à une crème neutre, caractérisé en ce qu'il est constitué d'un cône (1) de distribution à plusieurs compartiments (2) de fruits, tournant au moyen d'une couronne (3) motorisée (4) autour d'un récipient cylindrique (6), contenant la crème neutre destinée à être malaxée aux fruits broyés.

2. Dispositif selon la revendication 1 caractérisé en ce que chaque compartiment (2) de fruits comporte une vis sans fin (21) servant à introduire les fruits sélectionnés dans un bol mélangeur (18), dans lequel ils sont broyés au moyen d'une hélice (22) située à l'extrémité de la vis sans fin (21).

3. Dispositif selon les revendications 1 et 2, se caractérisant par le compartiment (2) du fruit sélectionné qui en tournant, et en se positionnant sur une coupe (26) de réception de l'entremets, viendra enclencher l'engrenage (26) du bol mélangeur (18) à l'engrenage (24) du moteur (23), afin de faire tourner le bol mélangeur (18) pour broyer les fruits et les malaxer ensuite avec la crème neutre.

4. Dispositif selon les revendications 1 et 3, caractérisé en ce que le corps central (5), est formé par deux récipients, l'un supérieur (6) contenant la crème neutre destinée à être malaxée aux fruits dans le bol mélangeur (18), et l'autre inférieur (7), contenant une autre crème (telle que "Chantilly) pour la finition ou décoration de l'entremets.

5. Dispositif selon la revendication 4, caractérisé en ce que chaque récipient (6) et (7) comporte un piston (10) et (11) à joint racleur (12) et (13), pour pousser et faire pénétrer la crème l'une dans le bol mélangeur par son goulot (19) et l'autre sur la coupe, par son goulot (20). Chaque piston est actionné par une vis sans fin à bille (16) et (17) motorisée (14) et (15).

6. Dispositif selon la revendication 1 caractérisé en ce que les récipients (6) et (7) contenant les crèmes, sont réfrigérés sur toute leur périphérie, par des évaporateurs à serpentins (8) et leur groupe de production de froid (9). Cette réfrigération servant également à maintenir en froid les fruits contenus dans les compartiments (2) du cône de distribution (1), ainsi que les fruits broyés et malaxés avec la crème dans le bol mélangeur (18).

7. Dispositif selon la revendication 1, caractérisé en ce que une préparation distribuant uniquement des fruits pressés peut être distribuée, sans adjonction de crème. Les déchets sont alors évacués automatiquement par la rotation inversée de l'hélice (22) entraînant avec elle les déchets et les expulsant par un orifice d'évacuation (35).

## Patentansprüche

1. Gekühlte Vorrichtung zur Herstellung und Ausgabe von Süßspeisen durch Zerkleinern von gewähltem Obst, das dann mit neutraler Sahne vermischt wird, dadurch gekennzeichnet, daß sie aus einem kegelförmigen Körper (1) mit mehreren Obst-Kompartments (2) besteht, der über einen Zahnkranz (3) durch einen Motor (4) um einen zylindrischen Behälter (6) dreht, welcher die neutrale Sahne, dazu bestimmt mit dem zerkleinerten Obst vermischt zu werden, aufnimmt.

2. Vorrichtung nach Anspruch 1, dadurch gekennzeichnet, daß jedes Obst-Kompartment (2) mit einer Förderschnecke (21) ausgerüstet ist, dazu bestimmt, das gewählte Obst in einen Mischbehälter (18) einzubringen, in dem es mit Hilfe eines am Ende der Förderschnecke (21) angebrachten Propellers (22) zerkleinert wird.

3. Vorrichtung nach den Ansprüchen 1 und 2, dadurch gekennzeichnet, daß das Kompartment (2) des gewählten Obstes bei der Drehung und Positionierung über einer Schale (26) zur Aufnahme der Süßspeise das Getrieberad (25) des Mischbehälters in das Getrieberad (24) des Motors (23) eingreifen läßt, damit der Mischbehälter (18) in Drehung versetzt wird, um das Obst zu zerkleinern und dann mit der neutralen Sahne zu vermischen.

4. Vorrichtung nach den Ansprüchen 1 und 3, dadurch gekennzeichnet, daß der Mittelkörper (5) aus zwei Behälterteilen besteht, einem Oberteil (6), welches die neutrale Sahne enthält, die im Mischbehälter (18) mit dem Obst vermischt werden soll, und einem Unterteil (7) welches eine andere Sahne (wie z.B. Chantilly"-Sahne) enthält für den Abschluß bzw. Verzierung der Süßspeise.

5. Vorrichtung nach Anspruch 4, dadurch gekennzeichnet, daß jedes Behältnis (6) und (7) mit einem Kolben (10) bzw. (11) mit Abstreifring (12) bzw. (13) ausgestattet ist, um die Sahne herauszudrücken und die eine durch den Ausfluß (19) in den Mischbehälter, die andere durch den Ausfluß (20) auf die Schale zu pressen. Jeder Kolben wird über eine kugelgelagerte Schneckenschraube (16) bzw. (17) durch einen Motor (14) bzw. (15) bewegt.

6. Vorrichtung nach Anspruch 1, dadurch gekennzeichnet, daß die Sahne enthaltenden Behälterteile (6) und (7) auf ihrem gesamten Umfang durch Rohrschlangen-Verdampfer (8) und ihr Kälteaggregat (9) gekühlt werden. Diese Kühlung dient gleichzeitig dazu, das Obst in den Kompartments (2) des Ausgabekörpers (1) sowie das zerkleinerte und mit der Sahne vermischte Obst in dem Mischbehälter (18) kühl zu halten.

7. Vorrichtung nach Anspruch 1, dadurch gekennzeichnet, daß eine Zubereitung von ausschließlich gepreßtem Obst, ohne Sahnebeimischung ausgegeben werden kann. Die Obstreste werden dann automatisch durch umgekehrtes Drehen des Propellers (22) abgesondert, welcher die Abfälle aufnimmt und durch eine Entleerungsöffnung (35) auswirft.

## Claims

1. Refrigerated device for producing and distributing sweet dishes by crushing selected fruits followed by mixing with an unflavoured cream, characterized in that it consists of a distribution cone (1) with several fruit compartments (2) turning through a motor-driven (4) crown wheel (3) around a cylindrical container (6) containing the unflavoured cream for mixing with the crushed fruit.

2. Device as per claim 1 characterized in that each compartment (2) of fruit has a worm screw (21) introducing selected fruit into a mixing bowl (18) in which they are crushed by a propellor at the end of the worm screw (21).

3. Device as per claims 1 and 2 characterized by the compartment (2) of selected fruit which, by turning and by positioning on a cap (26) for receiving the prepared sweet dishes, engages the mixing bowl (18) gear (26) with the motor (23) gearing (24) so as to turn the mixing bowl (18) for crushing the fruit and then mixing with the unflavoured cream.

4. Device as per claims 1 and 3 characterized in that the central casing is formed by two recipients, an upper one (6) containing the unflavoured cream for mixing with the fruit in the mixing bowl (18), and a lower one (7) containing another cream (such as whipped cream) to provide finish or decoration on the sweet dish.

5. Device as per claim 4 characterized in that each recipient (6) and (7) has a piston (10) and (11) with scrapper (12) and (13), one for forcing the cream into the mixing bowl through its spout (19) and the other into the cup through its spout (20). Each piston is operated by a worm screw (16) and (17) driven by motors (14) and (15).

6. Device as per claim 1 characterized in that the recipients (6) and (7) containing the creams are refrigerated on all their periphery by coil evaporators (8) and their cold production unit (9). This cooling system is also used to keep the fruit contained in compartments (2) of the distribution cone (1) and the fruit crushed and mixed with the cream in the mixing bowl (18), cool.

7. Device as per claim 1 characterized in that only a preparation of pressed fruit can be distributed, without the addition of cream. The wastes are then automatically evacuated by reverse rotation of the propeller (22) which expulses the waste by an evacuation port (35).
